# EUROPÄISCHE PATENTSCHRIFT

(11) **EP 2 527 208 B1**
(45) Veröffentlichungstag und Bekanntmachung des Hinweises auf die Patenterteilung: **23.10.2013**
(21) Anmeldenummer: 11167663.1
(22) Anmeldetag: 26.05.2011
(51) Int. Cl.: B60R 21/2165

(54) **Airbag-Abdeckung, insbesondere für Airbags in einem Kraftfahrzeug und Verfahren zu deren Herstellung**
Airbag cover, in particular for airbags in a motor vehicle and method for producing same
Recouvrement d'airbag, notamment pour airbags dans un véhicule automobile et son procédé de fabrication

(43) Veröffentlichungstag der Anmeldung: 28.11.2012
(73) Patentinhaber: International Automotive Components Group GmbH, 47804 Krefeld (DE)
(72) Erfinder: Siegfried, Lesnik, 47918 Tönisvorst (DE)
(74) Vertreter: Liesegang, Eva

(56) Entgegenhaltungen:
- EP-A1- 2 233 372
- DE-A1- 10 055 546
- US-A1- 2001 037 998
- US-A1- 2004 164 531

## Beschreibung

Die Erfindung betrifft eine Airbag-Abdeckung für einen Airbag in einem Kraftfahrzeug sowie ein Verfahren zu deren Herstellung. Eine solche Airbag-Abdeckung ist beispielsweise aus der EP 2 233 372 A1 bekannt.

Dieses Dokument offenbart eine Airbag-Abdeckung, insbesondere zur Verwendung in einer Airbag-Anordnung eines Kraftfahrzeuges, mit einem Trägerbauteil und einem an dem Trägerbauteil angeordneten Deckelbauteil, das dazu konfiguriert ist, in geschlossener Stellung einen Aufnahmeraum für ein Airbag-Aufprallpolster abzudecken und sich bei Auslösen des Airbags von dem Trägerbauteil zumindest teilweise zu lösen und den Aufnahmeraum freizugeben, wobei das Trägerbauteil und das Deckelbauteil mit einem Deckmaterial überdeckt sind, wobei zwischen dem Trägerbauteil und dem Deckelbauteil ein Sollbruchlinie ausgebildet ist, die wenigstens einen Zahn oder eine Welle an dem Rand des Deckelbauteils definiert, und das Deckmaterial eine Strukturschwächung aufweist, wobei die Sollbruchlinie zwischen dem Trägerbauteil und dem Deckelbauteil und die Strukturschwächung des Deckmaterials zumindest im Bereich des Zahns oder der Welle durch einen oder mehrere Schnitte gebildet sind, die das Trägerbauteil vollständig und das Deckmaterial teilweise durchdringen, und der oder die Schnitte zur Oberfläche des Deckmaterials unter einem Winkel ungleich 90° ausgebildet sind, so dass der oder die Schnitte eine Schnittfläche bilden, die mit der Unterseite des Deckelbauteils einen spitzen Winkel einschließt, und wobei das Deckmaterial eine Schaumschicht und eine dehnbare Dekorschicht aufweist.

Die Erfindung ist einsetzbar in Airbag-Anordnungen, die z.B. als ein Frontal- oder Seitenaufprallschutz in einem Kraftfahrzeug eingesetzt werden. Solche Airbag-Anordnungen weisen ein Airbag-Aufprallpolster und zugehörige Betriebseinrichtungen auf, die in einem Aufnahmeraum eines Trägerbauteils untergebracht sind, beispielsweise in der Instrumententafel eines Kraftfahrzeuges. Der Aufnahmeraum ist durch einen Deckel abgedeckt, der als ein Formteil zusammen mit dem Trägerbauteil hergestellt werden kann. Der Deckel und das Trägerbauteil, beispielsweise ein Träger einer Instrumententafel, sind miteinander verbunden, wobei zwischen dem Deckel und dem Trägerbauteil Sollbruchstellen ausgebildet sind. Bei Auslösen des Airbags bricht die Verbindung von Trägerbauteil und Deckel im Bereich der Sollbruchstellen, so dass sich der Deckel zumindest teilweise von dem Trägerbauteil löst und den Aufnahmeraum freigibt.

Derartige Airbag-Anordnungen sind beispielsweise im Lenkrad eines Kraftfahrzeuges und, auf der Beifahrerseite, in die Instrumententafel eingebaut. Es ist auch bekannt, in den Türen Airbag-Einrichtungen als Seitenaufprallschutz einzubauen. Airbag-Anordnungen sind durch Deckel aus Kunststoff oder umschäumten Metallteilen, die hier allgemein als Formteil bezeichnet werden, abgedeckt, wobei diese Deckel mit Sollbruchstellen versehen sind, die bei einer Airbagauslösung aufbrechen und ein einwandfreies Austreten des Aufprallpolsters, das unter dem Deckel liegt, gewährleisten. Die Sollbruchstellen sollen so bemessen sein, dass ein definiertes Reißverhalten des Deckels bei einer vorbestimmten Reißkraft erzielt wird.

Ferner ist es üblich, die Instrumententafel und andere Teile der Innenverkleidung eines Kraftfahrzeuges mit einem Deckmaterial abzudecken, beispielsweise einer Sichtbedeckung aus echtem Leder oder Kunstleder, Kunststofffolien, -häuten und dergleichen. Dieses Deckmaterial überspannt sowohl das Trägerbauteil als auch den Deckel.

Um ein einwandfreies Funktionieren der Airbag-Anordnung und insbesondere ein definiertes Aufreißen des Deckels zu gewährleisten, ist es im Stand der Technik üblich, das Deckmaterial im Bereich der Sollbruchstellen mit einer Reißlinie oder Reißnähten zu versehen. Hierzu ist es aus dem Stand der Technik z.B. bekannt, Lederbedeckungen aus mehreren Teilen zusammenzusetzen, die im Bereich der Sollbruchstellen der Abdeckung zusammengenäht sind. In Abhängigkeit von der Soll-Reißkraft wird die Stichlänge, die Stärke und das Material des Fadens gewählt, damit bei einer genau definierten Reißkraft die Naht reißt und das einwandfreie Austreten des Aufprallpolsters gewährleistet wird.

Des Weiteren ist es aus dem Stand der Technik bekannt, das Deckmaterial zu schwächen und im Bereich der Sollbruchstellen eine Reduzierung der Materialdicke des Deckmaterials vorzusehen. Beispielsweise wurde vorgeschlagen, ein Deckmaterial aus Leder, Kunstleder oder Kunststofffolie vorzusehen, bei dem eine partielle Reduzierung der Materialdicke des Deckmaterials im Bereich der Sollbruchstellen durch Abschneiden von Material hergestellt wird. Zur weiteren Erläuterung des Standes der Technik wird auf die Druckschriften DE 195 16 230 C2; DE 10 2006 054 590 B3; EP 0 428 935 B1 und EP 0 741 062 B1 verwiesen.

Diese Lösungen des Standes der Technik erfordern eine Bearbeitung und/oder Anpassung des Deckmaterials, um die Reißfestigkeit des Deckmaterials im Bereich der Sollbruchstellen zu verringern und ein definiertes Aufreißen des Deckmaterials beim Lösen des Deckels von dem Trägerbauteil zu erreichen. Des Weiteren ist es notwendig, das Deckmaterial präzise so über dem Trägerbauteil zu positionieren, dass die Schwächungsstellen im Bereich der Sollbruchstellen zu liegen kommen.

Die Dokumente DE 197 38493 A1 und US 6 942 243 B2 zeigen Airbag-Abdeckungen, die an ihrem Rand eine Art umlaufendes Schneidmesser aufweisen, das von der Airbag-Abdeckung nach oben in Richtung des Deckmaterials vorsteht und beim Auslösen des Airbags in das Deckmaterial einschneidet. Die US 5 466 000 zeigt eine Airbag-Abdeckung mit einer Schneidkante, wobei der gesamte Rand der Airbag-Abdeckung Zähne aufweist, die in einem Winkel von 90° von der Airbag-Abdeckung nach oben vorstehen und in das Deckmaterial einschneiden. Die US 5 375 875 zeigt eine Airbag-Abdeckung mit einzelnen Schneidspitzen, die ebenfalls von der Airbag-Abdeckung nach oben abstehen, um in das Deckmaterial einzuschneiden.

Die zuletzt beschriebenen Airbag-Abdeckungen weisen somit separate Schneidhilfen auf, die von der Abdeckung in einem Winkel nach oben, in Richtung des Deckmaterials vorstehen. Diese Schneidhilfen erfordern einen zusätzlichen Herstellungsschnitt und bergen die Gefahr von Verletzungen, wenn ein Passagier mit dem Kopf oder einem anderen Körperteil gegen die Airbag-Abdeckung aufprallt. Die Schneidhilfen würden bei einem Kopfaufschlag in die Stirn des Passagiers eingestanzt.

Die EP 2 233 372 A1 sieht vor, an dem Rand der Abdeckung wenigstens einen Zahn auszubilden, der sich von dem Rand des Deckelbauteils in dessen Ebene erstreckt und der beim Lösen des Deckelbauteils von dem Trägerbauteil das Deckmaterial einreißt. Dieser wenigstens eine Zahn wird entlang einer Sollbruchlinie freigeschnitten, welche zwischen der Abdeckung und dem Trägerbauteil ausgebildet wird. Die EP 2 233 372 A1 schafft somit eine Schneidhilfe, für die kein Extrabauteil und kein gesonderter Fertigungsschritt erforderlich ist, sondern diese Schneidhilfe entsteht bei der Ausbildung der Sollbruchlinie oder Aufreißnaht zwischen Trägerbauteil und Deckelbauteil quasi als "Nebenprodukt". Der oder die Zähne sind in der Richtung der Ebene des Trägers orientiert und nicht in Richtung des Deckmaterials, welches aufgerissen werden soll, vorstehen. Dadurch können Verletzungen aufgrund vorstehender Schneidhilfen vermieden werden. Gemäß der EP 2 233 372 A1 sollen die Zähne beim Lösen des Deckelbauteils von dem Trägerbauteil das Deckmaterial definiert einreißen, ohne dass das Deckmaterial im Bereich der Sollbruchlinie eine Strukturschwächung aufweisen muss.

Eine ähnliche Lösung ist in der DE 103 44 401 A1 beschrieben. Diese Schrift offenbart eine Airbag-Abdeckung mit einer Trägerschicht, die im Bereich der Öffnung geschwächt ist, so dass sich die Trägerschicht beim Auslösen des Airbags in definierter Weise entlang der Schwächung öffnet. Die Schwächung der Trägerschicht ist so gestaltet, dass beim Öffnen der Airbag-Abdeckung Zähne in der Trägerschicht die Dekorschicht auftrennen, wobei die Dekorschicht im Bereich der Öffnung ungeschwächt ist.

Ausgehend von dem oben erörterten Stand der Technik ist es eine Aufgabe der Erfindung, eine Airbagabdeckung anzugeben, deren Reißverhalten bei Auslösen des Airbags weiter optimiert ist.

Diese Aufgabe wird durch eine Airbag-Abdeckung gemäß Patentanspruch 1 sowie durch ein Verfahren zur Herstellung einer Airbag-Abdeckung gemäß Patentanspruch 11 gelöst. Bevorzugte Ausführungen der Erfindung sind in den abhängigen Ansprüchen angegeben.

Die Erfindung sieht eine Airbag-Abdeckung vor, insbesondere zur Verwendung in einer Airbaganordnung eines Kraftfahrzeuges, mit einem Trägerbauteil und einem an dem Trägerbauteil angeordneten Deckelbauteil, welches in seiner geschlossenen Stellung einen Aufnahmeraum für ein Airbag-Aufprallposten abdeckt und sich beim Auslösen des Airbags von dem Trägerbauteil zumindest teilweise löst und den Aufnahmeraum freigibt. Trägerbauteil und Deckelbauteil sind mit einem Deckmaterial abgedeckt. Zwischen dem Trägerbauteil und dem Deckelbauteil ist eine Sollbruchlinie ausgebildet, die wenigstens einen Zahn oder eine Welle an dem Rand des Deckelbauteils definiert, um beim Lösen des Deckelbauteils von dem Trägerbauteil das Deckmaterial einzureißen. Erfindungsgemäß weist das Deckmaterial eine Strukturschwächung auf, deren Kontur zumindest im Bereich des Zahns oder der Welle deckungsgleich mit der Kontur der Sollbruchlinie ist. In der bevorzugten Ausführung der Erfindung sind die Sollbruchlinie zwischen dem Trägerbauteil und dem Deckelbauteil und die Strukturschwächung des Deckmaterials weitgehend oder vollständig deckungsgleich. Die Sollbruchlinie zwischen dem Trägerbauteil und dem Deckelbauteil und die Strukturschwächung des Deckmaterials werden gemeinsam durch einen oder mehrere Schnitte gebildet, wobei die Schnitte das Trägerbauteil in Richtung seiner Dicke vollständig und das Deckmaterial teilweise durchtrennen.

Grundsätzlich können bei der Erfindung das Trägerbauteil und das Deckelbauteil ähnlich ausgebildet sein wie in der EP 2 233 372 A1. Zusätzlich weist das Deckmaterial eine Strukturschwächung auf, um ein definiertes Aufreißen des Deckmaterials bei verringerter Reißkraft und Dehnung der Deckschicht zu erzielen. Anders als im Stand der Technik muss die Strukturschwächung der Deckschicht nicht vorab vorgenommen und dann relativ zu der Sollbruchlinie in dem Trägerbauteil positioniert werden, sondern die Erfindung sieht vor, die Sollbruchlinie und die Strukturschwächung des Deckmaterials in ein und demselben Arbeitsgang durch Schneiden herzustellen. Dabei durchtrennen der oder die Schnitte das Trägerbauteil in Richtung seiner Dicke vollständig, während sie in das Deckmaterial nur teilweise eindringen. Der Aufwand zur Herstellung der erfindungsgemäßen Airbag-Abdeckung ist nicht größer als der Aufwand zur Herstellung einer Airbagabdeckung ohne Strukturschwächung des Deckmaterials, wobei es besonders vorteilhaft ist, dass die Strukturschwächung des Deckmaterials nicht relativ zur Sollbruchlinie des Trägers positioniert werden muss, weil diese Anpassung sowohl aufwendig als auch fehlerträchtig ist.

Die Erfindung schafft eine Airbag-Abdeckung, die bei einer geringeren Dehnung der Deckschicht und einer entsprechend geringeren Reißkraft als im Stand der Technik definiert aufreißt.

Bei der Erfindung verlaufen der oder die Schnitte zur Ausbildung der Sollbruchlinie zwischen Trägerbauteil und Deckelbauteil und der Strukturschwächung des Deckmaterials schräg zur Oberfläche des Deckmaterials, also unter einem Winkel ungleich 90°. Durch den oder die Schnitte wird eine Schnittfläche gebildet, die mit der Unterseite des Deckelbauteils einen spitzen Winkel einschließt, insbesondere einen Winkel zwischen 30° und 90°, spezieller einen Winkel zwischen 45° und 90° und besonders bevorzugt einen Winkel zwischen 60° und 70°. Dadurch werden am Rand des Deckelbauteils Zähne oder Wellen mit schrägen Schneidkanten gebildet, die bei Auslösen des Airbags in das Deckmaterial einschneiden und an vorbestimmten Punkten einen oder mehrere Initialrisse erzeugen, die zu einem definierten Aufreißen des Deckmaterials führen. Überraschenderweise hat sich ergeben, dass die schrägen Schneidflächen am Rand des Deckelbauteils nicht nur das Reißverhalten der Airbag-Abdeckung bei Auslösen des Airbags verbessern, sondern dass auch die Schwächungslinie in dem Deckmaterial von der Sichtseite des Deckmaterials her gar nicht mehr oder jedenfalls deutlich weniger als beim Stand der Technik optisch wahrnehmbar ist.

Das Deckmaterial ist mit einer Schaumschicht und einer dehnbaren Dekorschicht aufgebaut, wobei die Erfindung vorsieht, das Deckmaterial in Richtung seiner Dicke von der Unterseite her derart einzuschneiden, dass die Schaumschicht vollständig und die Dekorschicht teilweise durchtrennt oder geritzt wird. Der oder die Schnitte können beispielsweise in die Dekorschicht in Richtung ihrer Dicke zu etwa 85 % bis 98 % der Dicke der Dekorschicht, und bevorzugt zu etwa 90 % bis 95 % der Dicke der Dekorschicht eindringen. Dies ist eine stärkere Schwächung als im Stand der Technik üblich, wobei erfindungsgemäß die Schwächungslinie von der Oberfläche des Deckmaterials her gleichwohl nicht oder nahezu nicht wahrnehmbar ist. Es wird vermutet, dass dies auf die Kombination der schrägen Schnittrichtung und der wellen- oder zahn-förmigen Schnittführung zurückzuführen ist.

In der bevorzugten Ausführung der Erfindung weisen die Sollbruchlinie zwischen dem Trägerbauteil und dem Deckelbauteil und die Strukturschwächung des Deckmaterials nicht nur lediglich einen Zahn oder eine Welle auf. In einer ersten Ausführungsform sind über einem Abschnitt der Sollbruchlinie und der Strukturschwächung eine Mehrzahl von im Wesentlichen dreieckigen oder trapezförmigen Vorsprüngen nach Art einer Zahnreihe vorgesehen, um eine Auftrennstruktur zu bilden. In einer anderen Ausführungsform ist ein Abschnitt der Sollbruchlinie und der Strukturschwächung in Form eines Wellenschliffs, einer Sinuswelle oder einer modifizierten Sinuswelle ausgebildet, um die Auftrennstruktur zu bilden. Die Auftrennstruktur kann beispielsweise drei bis fünf Vorsprünge oder Wellen am Rand des Deckelbauteils aufweisen.

In einer Ausführung der Erfindung sind das Deckelbauteil und das Trägerbauteil an einem Rand über ein Scharnierelement verbunden, wobei die Auftrennstruktur im Bereich des dem Scharnierelement gegenüberliegenden Randes des Deckelbauteils ausgebildet ist. Die Schnitte zur Herstellung der Sollbruchlinie und der Strukturschwächung des Deckmaterials können beispielsweise durch Laserschneider oder durch Wasserstrahlschneiden hergestellt werden. Dies erfolgt erfindungsgemäß in einem einzigen Schneidvorgang durch das Material des Trägerbauteils und einen Teil des Deckmaterials hindurch. Sollbruchlinie und Schwächungsstruktur können durch einen durchgehenden Schnitt oder eine Reihe von Einzelschnitten gebildet werden.

Beispielsweise kann vorgesehen sein, dass die Sollbruchlinie und die Strukturschwächung im Bereich der Auftrennstruktur durch eine durchgehende Schnittlinie gebildet werden, während im übrigen Teil der Sollbruchlinie eine Reihe von Einzelschnitten vorgesehen wird. Es ist auch möglich, die Länge und den Abstand der Schnitte sowie die Schnitttiefe entlang der Sollbruchlinie zu variieren, um das Aufreißverhalten des Deckelbauteils zu steuern. Beispielsweise können im Bereich der Auftrennstruktur eine dichtere Folge von Schnitten oder längere Schnitte vorgesehen werden, während im übrigen Bereich der Sollbruchlinie weniger oder weniger lange Schnitte vorgesehen werden.

In einem Ausführungsbeispiel der Erfindung weist das Deckmaterial eine Schaumschicht aus einem thermoplastischen Polymer, beispielsweise aus Polyurethan, Polyolefin oder Polyvinylchlorid auf. Die Schaumschicht kann auch aus einer drei-dimensionalen Wirkware hergestellt sein. Beispiele für die dehnbare Dekorschicht sind Leder, Kunstleder, beispielsweise PVC oder ein thermoplastisches Polymer, wie TPU, auf eine Wirkware und einer Haut oder Folie aus einem thermoplastischen Polymer, wie PVC, TPO, TPU oder einer ABS/PVC-Mischung. Erfindungsgemäß können auch Kombinationen der genannten Schäume und Dekorschichten zum Aufbauen des Deckmaterials verwendet werden.

Die Zähne oder Wellen zur Ausbildung der Auftrennstruktur können grundsätzlich jede Form haben, die geeignet ist, beim Aufreißen des Deckelbauteils entlang der Sollbruchlinie und der Strukturschwächung in dem Deckmaterial Initialrisse zu erzeugen, die zu einem definierten Aufreißen des Deckmaterials führen. Auch verschiedene, unterschiedlich geformte Zähne oder Wellen können vorgesehen sein. Die Auftrennstruktur ist nicht auf eine bestimmte Form, Anzahl oder Anordnung der Zähne oder Wellen beschränkt. Die Sollbruchlinie sollte so ausgebildet sein, dass die Spitzen der Zähne oder Wellen vollständig freiliegen.

Die Anzahl, Anordnung und Form der Zähne oder Wellen hängt von dem gewünschten Reißverhalten, der Größe und Form des Deckelbauteils sowie von den gewählten Materialien und Materialstärken sowohl des Trägerbauteils und des Deckelbauteils als auch des Deckmaterials ab.

Trägerbauteil und Deckelbauteil können als ein Spritzgussteil aus Kunststoff oder als Pressteil aus einem Fasermaterial oder auf andere, an sich bekannte Weise hergestellt werden.

Die Erfindung sieht auch ein Verfahren zum Herstellen der Airbag-Abdeckung vor. Hierbei wird zunächst das Deckmaterial auf das Trägerbauteil aufgebracht. Anschließend wird die Sollbruchlinie in dem Trägerbauteil derart ausgebildet, dass sie wenigstens einen Zahn oder eine Welle an dem Rand des Deckelbauteils freischneidet. Die Sollbruchlinie wird durch eine oder mehrere Schnitte gebildet, welche das Trägerbauteil in Richtung seiner Dicke vollständig und das Deckmaterial teilweise durchdringen, um so gleichzeitig eine Strukturschwächung des Deckmaterials zu erzeugen, deren Kontur zumindest im Bereich des Zahns oder der Welle deckungsgleich mit der Kontur der Sollbruchlinie ist. Erfindungsgemäß wird somit in einem einzigen Schneidvorgang sowohl die Sollbruchlinie ausgebildet, welche das Deckelbauteil von dem Trägerbauteil abgrenzt, als auch die zu Sollbruchlinie deckungsgleiche Schwächungsstruktur in dem Deckmaterial ausgebildet. Vorzugsweise sind Sollbruchlinie und Schwächungsstruktur vollständig oder weitgehend vollständig deckungsgleich.

Wie oben beschrieben werden der oder die Schnitte zur Ausbildung der Sollbruchlinie und Schwächungsstruktur unter einem Winkel ungleich 90° zur Oberfläche des Deckmaterials ausgebildet. Die Schnittrichtung erfolgt unter einem spitzen Winkel relativ zur Unterseite des Deckelbauteils, wie oben erläutert. Für das Verfahren gelten die obigen Ausführungsformen zur Airbag-Abdeckung entsprechend. Beispiele für die Bearbeitung der Airbag-Abdeckung zur Ausbildung der Sollbruchlinie und der Strukturschwächung des Deckmaterials sind Laserschneiden und Wasserstrahlschneiden.

Die Erfindung ist im Folgenden anhand bevorzugter Ausführungsbeispiele mit Bezug auf die Zeichnungen näher erläutert.
- Fig. 1: zeigt eine isometrische Darstellung einer Instrumententafel mit einer Airbag-Anordnung gemäß der Erfindung;
- Fig. 2: zeigt eine Schnittdarstellung durch die Instrumententafel der Figur 1 entlang der Linie A-A, wobei der Schnitt durch die erfindungsgemäße Airbag-Abdeckung hindurchgeht;
- Fig. 3: zeigt eine Detailansicht (Detail B) der Schnittdarstellung der Fig. 2;
- Fig. 4: zeigt eine schematische perspektivische Darstellung eines Ausführungsbeispiels des Deckelbauteils während des Öffnens der erfindungsgemäßen Airbag-Abdeckung;
- Fig. 5: zeigt eine Detailansicht der Außenkante des Deckelbauteils der Fig. 4 nach dem Öffnen des Deckelbauteils;
- Fig. 6A und 6B: zeigen eine schematische Draufsicht und eine perspektivische Darstellung eines Deckelbauteils einer Airbag-Anordnung zur Erläuterung des Verlaufs der Sollbruchlinie gemäß einem Ausführungsbeispiel der Erfindung;
- Fig. 7A und 7B: zeigen eine schematische Draufsicht und eine perspektivische Darstellung eines Deckelbauteils einer Airbag-Anordnung zur Erläuterung des Verlaufs der Sollbruchlinie gemäß einem weiteren Ausführungsbeispiel der Erfindung;
- Fig. 8A und 8B: zeigen eine schematische Draufsicht und eine perspektivische Darstellung eines Deckelbauteils einer Airbag-Anordnung zur Erläuterung des Verlaufs der Sollbruchlinie gemäß noch einem weiteren Ausführungsbeispiel der Erfindung; und
- Fig. 9: zeigt eine Detaildarstellung für eine mögliche Form der Zähne, die an der Außenkante des Deckelbauteils ausgebildet sind.

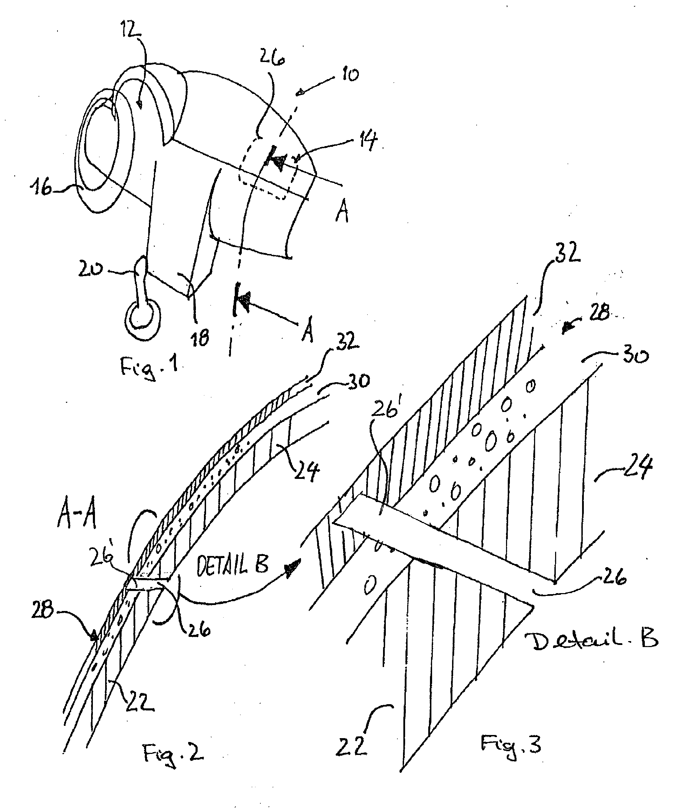

Fig. 1 zeigt eine isometrische Darstellung einer Instrumententafel 10 eines Kraftfahrzeuges mit einem Bereich für Anzeigeinstrumente 12 auf der Fahrerseite und einem Bereich für einen Airbag 14 als Frontalaufprallschutz auf der Beifahrerseite. Der Bereich für den Airbag 14 weist einen Aufnahmeraum für das Airbag-Aufprallpolster, Betriebseinrichtungen des Airbags und eine Abdeckung des Aufnahmeraums auf, welche in Fig. 1 nicht im Einzelnen gezeigt sind. Die Ankopplung eines Aufnahmeraums für ein Airbag-Aufprallpolster und die zugehörigen Betriebseinrichtungen unterhalb der Instrumententafel sind aus dem Stand der Technik grundsätzlich bekannt und beispielsweise in folgenden Veröffentlichungen gezeigt: DE 298 11 739 U1; DE 100 32 104 A1; DE 102 53 185 A1; und DE 2006 008 564 A1. Die Instrumententafel ist in der Regel mit einem ein- oder mehrteiligen Trägerbauteil 24 aufgebaut, das die Kontur der Instrumententafel 10 vorgibt und in welches die verschiedenen Anzeige- und Bediengeräte sowie ein Airbag-Modul integriert werden können. Das Airbag-Modul besteht aus dem Airbag-Aufprallpolster sowie Betriebseinrichtungen, beispielsweise einem Heiß- oder Kaltgasgenerator, einem Beschleunigungssensor, einer Auslöseeinheit etc. Der Aufnahmeraum für das Airbag-Aufprallpolster ist unterhalb des Bereichs 14 angeordnet und durch ein Deckelbauteil 22 abgedeckt. Das Deckelbauteil 22 und das Trägerbauteil 24 werden in der bevorzugten Ausführung der Erfindung aus einem einheitlichen Formteil gebildet, beispielsweise mittels Spritzgießen von Kunststoff oder Formen eines Plattenmaterials oder Pressen eines Faser- oder Kunststoffmaterials.

Das Formteil, welches das Trägerbauteil 24 und das Deckelbauteil 22 bildet, kann aus einer Naturfaser oder einem Kunststoff und grundsätzlicher aus Thermoplasten oder Duroplasten oder einer Kombination aus Thermo- und Duroplasten sowie Faser, hergestellt werden.

Während der Herstellung dieses Formteils oder in einem nachfolgenden Bearbeitungsschritt, wird zwischen dem Deckelbauteil 22 und dem Trägerbauteil 24 eine Sollbruchlinie 26 ausgebildet, die ein definiertes Aufreißen des Deckelbauteils 22 bei Auslösen des Airbag-Aufprallpolsters unter dem Deckelbauteil 22 gewährleistet. Die Sollbruchlinie kann beispielsweise durch Laserschneiden oder Wasserstrahlschneiden, gebildet werden. Dies ist im Folgenden mit weiteren Einzelheiten beschrieben.

In Fig. 1 sind ferner ein Lenkrad 16, eine Mittelkonsole 18 und ein Schalthebel 20 schematisch angedeutet.

Wie in den Fig. 2 und 3 gezeigt, sind das Trägerbauteil 24 der Instrumententafel und das Deckelbauteil 22 mit einem Deckmaterial 28 überdeckt, das in der gezeigten Ausführung zweilagig mit einer weichen Schaumschicht 30 und einer Dekorschicht 32 aufgebaut ist. Die Schaumschicht 30 kann beispielsweise einen PU-Schaum, Polyolefin, Polyvenylchlorid oder auch eine dreidimensionale Wirkware enthalten, und die Dekorschicht 32 kann aus einem Leder, Kunstleder, einer Kunststofffolie, einer Slush-Haut oder dergleichen hergestellt sein. Mögliche Materialien für die dehnbare Dekorschicht sind PVC, TPO, TPU oder eine ABS/PVC-Mischung, wobei die Erfindung hierauf nicht beschränkt ist. Das Deckmaterial 30 wird auf das Trägerbauteil 24 und das Deckelbauteil 22 z.B. aufkaschiert.

Das Deckelbauteil 22 ist gegenüber dem Trägerbauteil 24 durch die Sollbruchlinie 26 abgegrenzt, wobei das Deckmaterial 28 im Bereich der Sollbruchlinie 26 eine Strukturschwächung 26' aufweist, die mit der Sollbruchlinie 26' deckungsgleich ist. Die Sollbruchlinie 26 ist so ausgebildet, dass das Deckelteil 22 mit dem Trägerbauteil 24 über einen Scharnierbereich 34 dauerhaft verbunden ist. Dieser Scharnierbereich 34 kann einfach durch einen nahtlosen Übergang von dem Deckelbauteil 22 zu dem Trägerbauteil 24 gebildet sein oder ein Filmscharnier umfassen, das durch eine Materialdickenreduzierung zwischen einem Längsrand des Deckelbauteils 22 und dem Trägerbauteil 24 gebildet ist. Er kann ein Scharnier auf der Grundlage eines eingebetteten Gewebebandes oder eine andere Art von Scharnier sein, das ein Aufspringen des Deckelbauteils 22 bei Auslösen des Airbags erlaubt.

An dem dem Scharnierbereich gegenüberliegenden Längsrand 36 sowie an den beiden Seitenrändern 38, 40 sind zwischen dem Deckelbauteil 22 und dem Trägerbauteil 24 die Sollbruchlinie 26 und die Strukturschwächung 26' so ausgebildet, dass der Rand des Deckelbauteils 22 Zähne und/oder Wellen aufweist, die beim Lösen des Deckelbauteils 22 von dem Trägerbauteil 24 das Deckmaterial 38 über dem Deckelbauteil einreißen. Die Zähne und/oder Wellen sollten vorzugsweise an dem dem Scharnierbereich 34 gegenüberliegenden Längsrand 36 des Deckelbauteils 22 und insbesondere in der Mitte des Längsrandes 36 und/oder im Bereich der beiden an den Längsrand 36 angrenzenden Ecken 46, 48 ausgebildet sein. Optional können auch an den Seitenrändern 38, 40 des Deckelbauteils 22 Zähne und/oder Wellen ausgebildet werden.

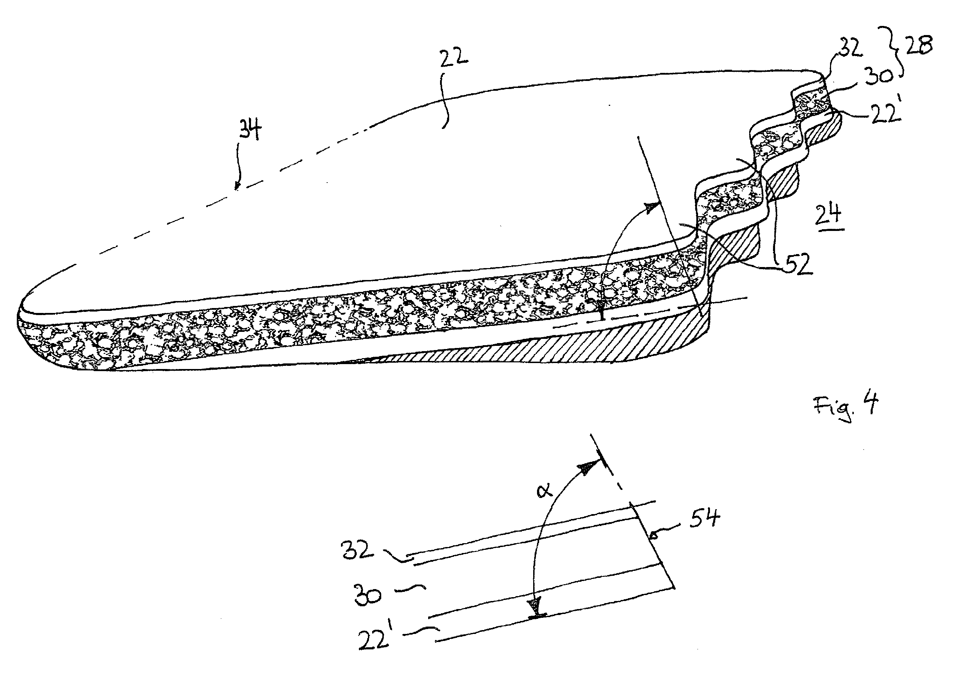

Erfindungsgemäß fluchten die Sollbruchlinie 26 und die Strukturschwächung 26', welche das Deckelbauteil 22 von dem Trägerbauteil 34 abgrenzen, und sind somit über wenigstens einen Teil, vorzugsweise über der gesamten Länge der Sollbruchlinie 26 deckungsgleich. Die Sollbruchlinie 26 in dem Trägerbauteil und die Strukturschwächung 26' in dem Deckmaterial werden durch einen einheitlichen Schneidvorgang gebildet, wobei eine durchgehende oder unterbrochene Schnittlinie oder eine Perforation durch das Material des Trägers 24 und einen Teil des Deckmaterials 38 hindurch ausgebildet wird. Die dadurch gebildete Schnittfläche erstreckt sich schräg zur Oberfläche des Deckmaterials, wie in den Fig. 2 und 3 gezeigt. Wie weiter unten mit Bezug auf Fig. 4 erläutert ist, schließt die Schnittfläche mit der Unterseite des Deckelbauteils 22 einen spitzen Winkel ein, insbesondere einen Winkel zwischen 30° und 90°, spezieller zwischen 45 und 90° und besonders bevorzugt zwischen 60 und 80°, beispielsweise einen Winkel von ungefähr 70°. Dadurch werden schräge Zähne oder Wellen an der Seitenkante des Deckelbauteils ausgebildet, die ein präzises Einschneiden des Deckelbauteils in das Deckmaterial und somit ein definiertes Reißen des Deckmaterials bei Auslösen des Airbags erzielen.

In der Ausführung der Erfindung wird die Schnitttiefe zur Ausbildung der Sollbruchlinie 26 und der Strukturschwächung 26' derart gewählt, dass der Schnitt das Trägermaterial 24 sowie die Schaumschicht 30 des Deckmaterials vollständig durchtrennt und zu etwa 85 bis 98%, vorzugsweise zu etwa 90 bis 95%, gesehen in Richtung der Dicke, in die Dekorschicht 32 eindringt.

Eine vorteilhafte Ausführungsform der Airbag-Abdeckung gemäß der Erfindung ist in Fig. 4 dargestellt. In dieser Ausführung ist die Sollbruchlinie 26 entlang der dem Scharnierbereich 34 des Deckelbauteils 22 gegenüberliegenden Kante wellenförmig ausgebildet, wobei in der gezeigten Ausführung vier Wellen 52 vorgesehen sind. In Fig. 4 ist auch der Aufbau des Deckelbauteils 22 gut zu erkennen, mit einem Träger 22' des Deckelbauteils 22 sowie der Schaumschicht 30 und der Dekorschicht 32 des Deckmaterials 28. Der zwischen der Unterseite des Deckelbauteils 22 und der die Seitenkante des Deckelbauteils bildenden Schnittfläche 54 gebildete spitze Winkel α ist in der Ausschnittsvergrößerung in Fig. 4 dargestellt.

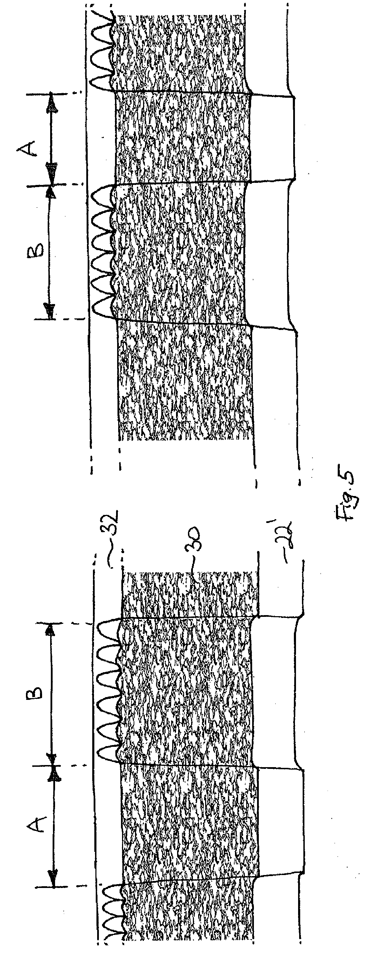

Fig. 5 zeigt eine Ausschnittsvergrößerung der durch die Schnittfläche 54 gebildeten Seitenkante des Deckelbauteils nach dem Lösen des Deckels von dem Trägerbauteil. In der gezeigten Ausführung sind die Sollbruchlinie und die Strukturschwächung des Deckmaterials durch eine unterbrochene Laserschnitt-Schwächung gebildet, mit ungeschwächten Bereichen A und geschwächten Bereichen B. In der Figur ist zu erkennen, dass die jeweiligen Teilschnitte vollständig durch das Trägermaterial 22' und die Schaumschicht 30 hindurchgehen, während die einzelnen Schnitte die Dekorschicht 32 nicht vollständig durchdringen. In der Praxis können Sollbruchlinie 26 und Strukturschwächung 26' auch durch eine Vielzahl von Perforationen realisiert sein. Es sei bemerkt, dass die Darstellung der Größen- und Dickenverhältnisse in Fig. 5 und den anderen Figuren lediglich schematisch und beispielhaft ist und dass die Erfindung nicht hierauf beschränkt ist.

Überraschend hat sich bei der Erfindung gezeigt, dass nicht nur das Reißverhalten der erfindungsgemäßen Airbag-Anordnung dem Stand der Technik insofern überlegen ist, als ein präzises Aufreißen der Deckschicht bei verringerter Reißkraft und Dehnung der Deckschicht erzielt werden kann, sondern dass auch trotz der größeren Eindringtiefe der Strukturschwächung in das Deckmaterial die Strukturschwächung von der Oberseite des Deckmaterials her nicht oder nahezu nicht optisch und haptisch wahrnehmbar sind.

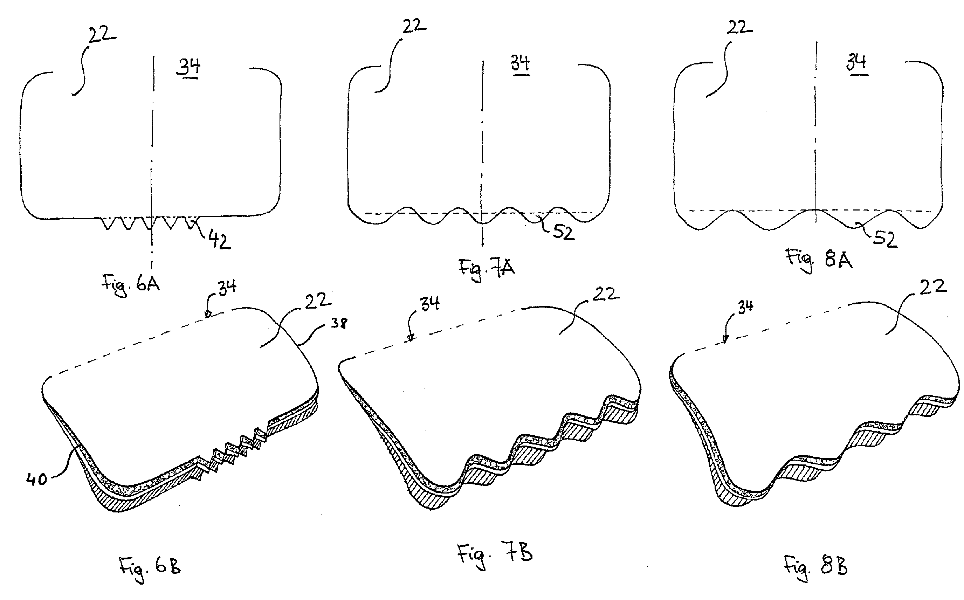

Die Fig. 6A, 6B, 7A, 7B, 8A und 8B zeigen in Draufsicht sowie in perspektivischer Darstellung drei verschiedene Ausgestaltungen für die Kontur der Sollbruchlinie der erfindungsgemäßen Airbag-Anordnung. In der Ausführung der Fig. 6A und 6B weist das Deckelbauteil 22 an seiner dem Scharnierbereich 34 gegenüberliegenden Seitenkante fünf Zähne 42 auf. Die Zähne 42 sind als dreieckige Vorsprünge ausgebildet, sie könnten jedoch auch trapezförmig, parabolisch oder hyperbolisch, gegabelt oder anders geformt sein.

In der Ausführung der Fig. 7A und 7B sind an der dem Scharnierbereich 34 gegenüberliegenden Kante des Deckelbauteils 22 fünf Wellen 52 ausgebildet, und in der Ausführung der Fig. 8A und 8B sind an der entsprechenden Seitenkante vier Wellen 52 ausgebildet. Es ist auch möglich, im Bereich der Sollbruchlinie des Deckelbauteils eine Riffelung nach Art eines Wellenschliffs vorzusehen, sowie eine Kombination von Wellen und Zähnen.

Selbstverständlich ist die Erfindung nicht auf die gezeigte Anordnung der Zähne 42 und Wellen 52 begrenzt, und es können im Bereich der Seitenkanten und Ecken des Deckelbauteils eine größere oder kleinere Anzahl von Wellen und/oder Zähnen vorgesehen sein.

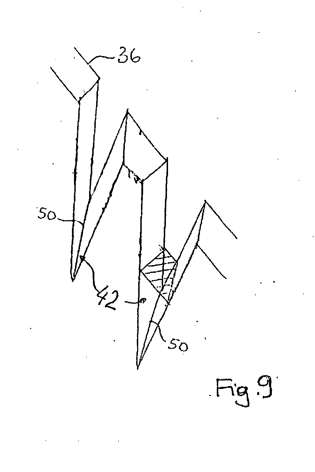

In sämtlichen Ausführungen der Erfindung ist die Sollbruchlinie und die Strukturschwächung mindestens im Bereich der Wellen und Zähne schräg zur Oberfläche des Dekormaterials ausgebildet, wie in den Figuren 4 und 9 dargestellt.

Fig. 9 zeigt schematisch eine perspektivische Darstellung der Schnittfläche entlang der Außenkante des Deckelbauteils, wobei der Schichtaufbau, mit Trägermaterial, Schaumschicht und Dekorschicht nicht im Einzelnen dargestellt ist. In der Ausführung der Fig. 9 ist der Rand des Deckelbauteils mit Zähnen 42 versehen, deren Schneidkante mit der Unterseite des Deckelbauteils einen spitzen Winkel einschließen. Dadurch sind die Seitenflächen der Zähne geneigt, so dass sich ein trapezförmiger Querschnitt der Zähne ergibt, wie in Fig. 9 mittels Schraffur angedeutet ist. Eine ähnliche Struktur ergibt sich bei einer wellenförmig gestalteten Kante.

In der bevorzugten Ausführung der Erfindung wird die Airbag-Abdeckung dadurch hergestellt, dass das Deckmaterial auf das Trägerbauteil aufgebracht, beispielsweise aufkaschiert wird. Anschließend werden die Sollbruchlinie in dem Trägerbauteil und die Strukturschwächung in dem Deckmaterial durch Laserschneiden oder Wasserstrahlschneiden ausgebildet, wobei diese Sollbruchlinie das Deckelbauteil abgrenzt. Zur Ausbildung der schrägen Seitenkante wird das Schneidwerkzeug, beispielsweise der Laser- oder Wasserstrahl, schräg zur Oberfläche des Formteils ausgerichtet.

Während die Sollbruchlinie und die Strukturschwächung beispielsweise in den Fig. 6A, 7A und 8A als durchgezogene Linie dargestellt ist, wird sie in der Praxis in der Regel aus einer Reihe voneinander beabstandeter einzelner Schnitte oder Perforationen bestehen, wobei erfindungsgemäß jeweils ein Zahn oder eine Welle teilweise oder vollständig frei geschnitten wird. Der Abstand der einzelnen Schnitte oder Perforationspunkte ist abhängig von der Größe des Deckelbauteils, den verwendeten Materialien und Materialstärken. Ebenso ist die genaue Gestalt, Anzahl und Anordnung der Zähne und/oder Wellen abhängig von den Abmessungen des Deckelbauteils, den verwendeten Materialien und Materialstärken sowie der gewünschten Auslöseempfindlichkeit der Airbag-Abdeckung.

Die in der vorstehenden Beschreibung, den Figuren und den Ansprüchen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 10: Instrumententafel
- 12: Bereich für Anzeigeinstrumente
- 14: Bereich für Airbag
- 16: Lenkrad
- 18: Mittelkonsole
- 20: Schalthebel
- 22: Deckelbauteil
- 22': Trägermaterial des Deckelbauteils
- 24: Trägerbauteil
- 26: Sollbruchlinie
- 26': Strukturschwächung
- 28: Deckmaterial
- 30: Schaumschicht
- 32: Dekorschicht
- 34: Scharnierbereich
- 36: Längsrand
- 38, 40: Seitenränder
- 42: Zähne
- 46,48: Ecken
- 50: Schneidkanten
- 52: Wellen
- 54: Schnittfläche
- α: Spitzer Winkel

## Patentansprüche

1. Airbag-Abdeckung, insbesondere zur Verwendung in einer Airbag-Anordnung eines Kraftfahrzeuges, mit einem Trägerbauteil (24) und einem an dem Trägerbauteil (24) angeordneten Deckelbauteil (22), das dazu konfiguriert ist, in geschlossener Stellung einen Aufnahmeraum für ein Airbag-Aufprallpolster abzudecken und sich bei Auslösen des Airbags von dem Trägerbauteil (24) zumindest teilweise zu lösen und den Aufnahmeraum freizugeben, wobei das Trägerbauteil (24) und das Deckelbauteil (22) mit einem Deckmaterial (28) überdeckt sind, wobei zwischen dem Trägerbauteil (24) und dem Deckelbauteil (22) ein Sollbruchlinie (26) ausgebildet ist, die wenigstens einen Zahn (42) oder eine Welle (52) an dem Rand (36) des Deckelbauteils (22) definiert, und das Deckmaterial (28) eine Strukturschwächung (26') aufweist, wobei die Kontur der Strukturschwächung zumindest im Bereich des Zahns oder der Welle deckungsgleich mit der Kontur der Sollbruchlinie (26) ist, wobei die Sollbruchlinie (26) zwischen dem Trägerbauteil (24) und dem Deckelbauteil (22) und die Strukturschwächung (26') des Deckmaterials (28) zumindest im Bereich des Zahns oder der Welle durch einen oder mehrere Schnitte gebildet sind, die das Trägerbauteil (24) vollständig und das Deckmaterial (28) teilweise durchdringen, und der oder die Schnitte zur Oberfläche des Deckmaterials (28) unter einem Winkel (α) ungleich 90° ausgebildet sind, so dass der oder die Schnitte eine Schnittfläche (54) bilden, die mit der Unterseite des Deckelbauteils (22) einen spitzen Winkel einschließt, und wobei das Deckmaterial (28) eine Schaumschicht (30) und eine dehnbare Dekorschicht (32) aufweist und der oder die Schnitte die Schaumschicht (30) vollständig sowie die Dekorschicht in Richtung ihrer Dicke zu ungefähr 85 bis 98 % der Dicke der Dekorschicht (32) durchdringen.

2. Airbag-Abdeckung nach Anspruch 1, wobei die Sollbruchlinie (26) zwischen dem Trägerbauteil (24) und dem Deckelbauteil (22) und die Strukturschwächung (26') des Deckmaterials (28) vollständig deckungsgleich sind.

3. Airbag-Abdeckung nach Anspruch 1 oder 2, wobei der Zahn (42) oder die Welle (52) an dem Rand (36) des Deckelbauteils (22) sich in der Ebene des Deckelbauteils (22) von dem Rand des Deckelbauteils (22) erstreckt.

4. Airbag-Abdeckung nach eine der vorangehenden Ansprüche, wobei die Schnittfläche mit der Unterseite des Deckelbauteils einen Winkel zwischen 30° und 90°, spezieller zwischen 45° und 90° und noch spezieller von 60° bis 80° einschließt.

5. Airbag-Abdeckung nach einem der vorangehenden Ansprüche, wobei die Sollbruchlinie (26) zwischen dem Trägerbauteil (24) und dem Deckelbauteil (22) und die Strukturschwächung (26') des Deckmaterials (28) wenigstens abschnittsweise die Form einer Mehrzahl von im Wesentlichen dreieckigen oder trapezförmigen Vorsprüngen haben, um eine Auftrennstruktur zu bilden.

6. Airbag-Abdeckung nach einem der Ansprüche 1 bis 4, wobei die Sollbruchlinie (26) zwischen dem Trägerbauteil (24) und dem Deckelbauteil (22) und die Strukturschwächung (26') des Deckmaterials (28) wenigstens abschnittsweise die Form eines Wellenschliffs, einer Sinuswelle oder einer modifizierten Sinuswelle haben, um eine Auftrennstruktur zu bilden.

7. Airbag-Abdeckung nach einem der Ansprüche 5 und 6, wobei die Auftrennstruktur drei bis fünf Vorsprünge oder Wellen (52) an dem Rand des Deckelbauteils (22) aufweist.

8. Airbag-Abdeckung nach einem der Ansprüche 5 bis 7, wobei das Deckelbauteil (22) mit dem Trägerbauteil (24) an einem Rand (34) über eine Scharnierelement verbunden ist und wobei die Auftrennstruktur im Bereich des dem Scharnierelement gegenüberliegenden Randes (36) des Deckelbauteils (22) ausgebildet ist.

9. Airbag-Abdeckung nach einem der vorangehenden Ansprüche, wobei die Sollbruchlinie (26) zwischen dem Trägerbauteil (24) und dem Deckelbauteil (22) und die Strukturschwächung (26') des Deckmaterials (28) durch Laserschneiden oder Wasserstrahlschneiden in einem einheitlichen Arbeitsgang hergestellt sind.

10. Airbag-Abdeckung nach einem der vorangehenden Ansprüche, wobei das Deckmaterial (28)
eine Schaumschicht (30) aus einem thermoplastischen Polymer, insbesondere Polyurethan, Polyolefin oder Polyvinylchlorid, oder aus einer drei-dimensionalen Wirkware und
eine dehnbare Dekorschicht (32) aus Leder, aus Kunstleder, insbesondere PVC oder ein thermoplastisches Elästomer, wie TPU, auf einer Wirkware oder aus einer Haut oder Folie aus einem thermoplastischen Polymer, wie PVC, TPO, TPU oder einer ABS/PVC-Mischung, oder
Kombinationen aus den genannten Schäumen und Dekorschichten (32) aufweist.

11. Verfahren zum Herstellen einer Airbag-Abdeckung, insbesondere zur Verwendung in einer Airbag-Anordnung eines Kraftfahrzeuges, mit den Verfahrenschritten: Aufbringen eines Deckmaterials (28) auf ein Trägerbauteil (24); und Ausbilden einer Sollbruchlinie (26) in dem Trägerbauteil (24), wobei die Sollbruchlinie (26) ein Deckelbauteil (22) in dem Trägerbauteil (24) definiert, das dazu konfiguriert ist, in geschlossener Stellung einen Aufnahmeraum für ein Airbag-Aufprallpolster abzudecken und sich bei Auslösen des Airbags von dem Trägerbauteil (24) zumindest teilweise zu lösen und den Aufnahmeraum freizugeben, wobei die Sollbruchlinie (26) wenigstens einen Zahn (42) oder eine Welle (52) an dem Rand (36) des Deckelbauteils (22) freischneidet und wobei die Sollbruchlinie (26) durch einen oder mehrere Schnitte gebildet wird, die das Trägerbauteil (24) in Richtung seiner Dicke vollständig und das Deckmaterial (28) teilweise durchdringen, um eine Shukturschwächung (26') des Deckmaterials (28) zu erzeugen, deren Kontur zumindest im Bereich des Zahns oder der Welle deckungsgleich mit der Kontur der Sollbruchlinie (26) ist, wobei der oder die Schnitte zur Oberfläche des Deckmaterials (28) unter einem Winkel (α) ungleich 90° ausgebildet werden, so dass der oder die Schnitte eine Schnittfläche (54) bilden, die mit der Unterseite des Deckelbauteils (22) einen spitzen Winkel einschließt, und wobei das Deckmaterial (28) eine Schaumschicht (30) und eine dehnbare Dekorschicht (32) aufweist und der oder die Schnitte die Schaumschicht (30) vollständig sowie die Dekorschicht in Richtung ihrer Dicke zu ungefähr 85 bis 98 % der Dicke der Dekorschicht (32) durchdringen.

12. Airbag-Abdeckung nach Anspruch 11, wobei die Sollbruchlinie (26) zwischen dem Trägerbauteil (24) und dem Deckelbauteil (22) und die Strukturschwächung (26') des Deckmaterials (28) durch Laserschneiden oder Wasserstrahlschneiden in einem einheitlichen Schneidvorgang hergestellt werden.

## Claims

1. An airbag cover, in particular for use in an airbag system of a motor vehicle, including a support component (24) and a top-cover component (22) arranged on the support component (24) that is configured, to cover a receptacle for an airbag impact-cushion in a closed position and to be at least partially loosened from the support component (24) upon triggering of the airbag and to release the receptacle, wherein the support component (24) and the top-cover component (22) are covered up with a covering material (28), in which a breakage line (26) is formed between the support component (24) and the top-cover component (22), which defines at least one serration (42) or one undulation (52) at the edge (36) of the top-cover component (22), and the covering material (28) exhibits a structural weakening (26'), wherein the contour of the structural weakening is congruent with the contour of the breakage line (26) at least in the area of the serration or the undulation, wherein the breakage line (26) between the support component (24) and the top-cover component (22) and the structural weakening (26') of the covering material (28) are formed in the area of the serration or the undulation by one or a plurality of cuts that fully penetrate the support component (24) and partially penetrate the covering material (28), wherein the cut or cuts are formed at an angle (α) to the surface of the covering material (28) that is different from 90°, so that the cut or cuts form a cut surface (54), which makes an acute angle with the underside of the top-cover component (22), and wherein the covering material (28) comprises a foam layer (30) and an elastic decorative layer (32) and in which the cut or cuts fully penetrate the foam layer (30) and partially penetrate the decorative layer (32) in a direction toward its thickness, to approximately 85 to 98% of the thickness of the decorative layer (32).

2. The airbag cover according to claim 1, wherein the breakage line (26) between the support component (24) and the top-cover component (22) and the structural weakening (26') of the covering material (28) are entirely congruent.

3. The airbag cover according to claim 1 or 2, wherein the serration (42) or the undulation (52) at the edge (36) of the top-cover component (22) extends into the plane of the top-cover component (22) from the edge of the top-cover component (22).

4. The airbag cover according to one of the preceding claims, wherein the cut surface makes an angle between 30° and 90°, more specifically between 45° and 90°, and even more specifically from 60° to 80° with the underside of the top-cover component.

5. The airbag cover according to one of the preceding claims, wherein the breakage line (26) between the support component (24) and the top-cover component (22) and the structural weakening (26') of the covering material (28) has at least in sections the shape of a plurality of essentially triangular or trapezoidal projections, in order to form a severing structure.

6. The airbag cover according to one of claims 1 through 4, wherein the breakage line (26) between the support component (24) and the top-cover component (22) and the structural weakening (26') of the covering material (28) has at least in sections the shape of an undulatory cut, a sine wave, or a modified sine wave, in order to form a severing structure.

7. The airbag cover according to one of claims 5 and 6, wherein the severing structure exhibits three to five projections or undulations (52) at the edge of the top-cover component (22).

8. The airbag cover according to one of claims 6 through 7, wherein the top-cover component (22) is connected to the support component (24) at an edge (36) above a hinge element and in which the severing structure is formed in the area of the edge (36) of the top-cover component (22) facing the hinge element.

9. The airbag cover according to one of the preceding claims, wherein the breakage line (26) between the support component (24) and the top-cover component (22) and the structural weakening (26') of the covering material (28) are made by laser cutting or waterjet cutting in an integrated work procedure.

10. The airbag cover according to one of the preceding claims, wherein the covering material (28) comprises:
a foam layer (30) made of a thermoplastic polymer, especially polyurethane, polyolefin, or polyvinyl chloride, or of a three-dimensional fabric, and
an elastic decorative layer (32) of leather, of imitation leather, particularly PVC or a thermoplastic elastomer such as TPU, on a fabric or of a skin or film of a thermoplastic polymer such as PVC, TPO, TPU, or an ABS/PVC mixture, or
a combination of the foams and decorative layers (32) cited.

11. A method for manufacturing an airbag cover, in particular for use in an airbag arrangement of a motor vehicle, with the following method steps: applying a covering material (28) to a support component (24), and forming a breakage line (26) in the support component (24), wherein the breakage line (26) defines a top-cover component (22) in the support component (24) that is configured to cover a receptacle for an airbag impact-cushion in a closed position and to be at least partially loosened from the support component (24) upon triggering of the airbag and to release the receptacle, wherein the breakage line (26) cleanly cuts at least one serration (42) or one undulation (52) at the edge (36) of the top-cover component (22), and in which the breakage line (26) is formed by one or a plurality of cuts, which fully penetrate the support component (24) in a direction toward its thickness and partially penetrate the covering material (28), in order to produce a structural weakening (26') of the covering material (28), the contour of which is congruent with the contour of the breakage line (26) at least in the area of the serration or of the undulation, wherein the cut or cuts are formed at an angle (α) to the surface of the covering material (28) that is different from 90°, so that the cut or cuts form a cut surface (54), which makes an acute angle with the underside of the top-cover component (22), and wherein the covering material (28) comprises a foam layer (30) and an elastic decorative layer (32) and in which the cut or cuts fully penetrate the foam layer (30) and partially penetrate the decorative layer (32) in a direction toward its thickness, to approximately 85 to 98% of the thickness of the decorative layer (32).

12. The airbag cover according to claim 11, wherein the breakage line (26) between the support component (24) and the top-cover component (22) and the structural weakening (26') of the covering material (28) are made by laser cutting or waterjet cutting in an integrated cutting process.

## Revendications

1. Recouvrement pour airbag, en particulier pour utilisation dans un arrangement d'airbag d'un véhicule à moteur, comportant un composant support (24) et un composant couvercle (22) disposé contre le composant support (24) et configuré de façon à recouvrir en position fermée un logement destiné à un rembourrage d'impact pour airbag, et, lors du déclenchement de l'airbag, à se détacher au moins partiellement du composant support (24) et à dégager le logement, le composant support (24) et le composant couvercle (22) étant recouverts d'un matériau de couverture (28), une ligne de rupture (26) étant configurée entre le composant support (24) et le composant couvercle (22), ligne de rupture qui définit au moins une dent (42) ou une ondulation (52) sur le bord (36) du composant couvercle (22) ; et le matériau de couverture (28) comprenant une zone d'affaiblissement structural (26'), le contour de la zone d'affaiblissement structural recouvrant parfaitement, au moins dans la zone de la dent ou de l'ondulation, le contour de la ligne de rupture (26) ; la ligne de rupture (26), entre le composant support (24) et le composant couvercle (22), et la zone d'affaiblissement structural (26') du matériau de couverture (28) ; au moins dans la zone de la dent ou de l'ondulation, étant formées par une ou plusieurs découpes, qui traversent complètement le composant support (24) et partiellement le matériau de couverture (28), et la ou les découpes étant configurées de façon à faire un angle α différent de 90° avec la surface du matériau de couverture (28), de telle sorte que la ou les découpes forment une surface de coupe (54), qui avec la face inférieure du composant couvercle (22) fait un angle aigu ; et le matériau de couverture (28) comportant une couche de mousse (30) et une couche décorative extensible (32), et la ou les découpes pénétrant dans la couche de mousse (30) d'une manière complète, ainsi que dans la couche décorative dans la direction de son épaisseur sur environ 85 à 98 % de l'épaisseur de la couche décorative (32).

2. Recouvrement pour airbag selon la revendication 1, dans lequel la ligne de rupture (26), entre le composant support (24) et le composant couvercle (22), et la zone d'affaiblissement structural (26') du matériau de couverture (28), se recouvrent complètement.

3. Recouvrement pour airbag selon la revendication 1 ou 2, dans lequel la dent (42) ou l'ondulation (52) s'étend contre le bord (36) du composant couvercle (22) dans le plan du composant couvercle (22), à partir du bord du composant couvercle (22).

4. Recouvrement pour airbag selon l'une des revendications précédentes, dans lequel la surface de coupe fait avec la face inférieure du composant couvercle un angle compris entre 30 et 90°, plus particulièrement entre 45 et 90° et d'une manière encore plus particulière de 60 à 80°.

5. Recouvrement pour airbag selon l'une des revendications précédentes, dans lequel la ligne de rupture (26), entre le composant support (24) et le composant couvercle (22), et la zone d'affaiblissement structural (26') du matériau de couverture (28), ont, au moins par segments, la forme d'un grand nombre de saillies pour l'essentiel triangulaires ou trapézoïdales, pour former une structure de séparation.

6. Recouvrement pour airbag selon l'une des revendications 1 à 4, dans lequel la ligne de rupture (26) entre le composant support (24) et le composant couvercle (22) et la zone d'affaiblissement structural (26') du matériau de couverture (28) ont, au moins par segments, la forme d'une lame dentelée, d'une ondulation sinusoïdale ou d'une ondulation sinusoïdale modifiée, pour former une structure de séparation.

7. Recouvrement pour airbag selon l'une des revendications 5 et 6, dans lequel la structure de séparation comprend trois à cinq saillies ou ondulations (52) contre le bord du composant couvercle (22).

8. Recouvrement pour airbag selon l'une des revendications 5 à 7, dans lequel le composant couvercle (22) est assemblé au composant support (24) contre un bord (34) par l'intermédiaire d'un élément charnière, et la structure de séparation étant configurée dans la zone du bord (36) du composant couvercle (22) opposé à l'élément charnière.

9. Recouvrement pour airbag selon l'une des revendications précédentes, dans lequel la ligne de rupture (26) entre le composant support (24) et le composant couvercle (22) et la zone d'affaiblissement structural (26') du matériau de couverture (28) sont réalisées par découpe laser ou par découpe au jet d'eau, en une passe homogène.

10. Recouvrement pour airbag selon l'une des revendications précédentes, dans lequel le matériau de couverture (28) comprend
une couche de mousse (30) en un polymère thermoplastique, en particulier un polyuréthanne, une polyoléfine ou un poly(chlorure de vinyle), ou en un article tricoté tridimensionnel, et
une couche décorative extensible (32) en cuir, en simili cuir, en particulier en PVC ou en un élastomère thermoplastique tel que le TPU, en un article tricoté ou en une peau ou une feuille d'un polymère thermoplastique tel que le PVC, le TPO, le TPU ou un mélange ABS/PVC, ou
des combinaisons des mousses et des couches décoratives (32) mentionnées.

11. Procédé de fabrication d'un recouvrement pour airbag, en particulier pour utilisation dans un arrangement pour airbag d'un véhicule à moteur, comprenant les étapes suivantes :
application d'un matériau de couverture (28) sur un composant support (24) ; et réalisation d'une ligne de rupture (26) dans le composant support (24), la ligne de rupture (26) définissant un composant couvercle (22) dans le composant support (24), qui est configuré de façon, en position fermée, à recouvrir un logement destiné à un rembourrage d'impact pour airbag, et à se détacher au moins partiellement du composant support (24) lors du déclenchement de l'airbag et à dégager le logement ; la ligne de rupture (26) dégageant par découpage au moins une dent (42) ou une ondulation (52) contre le bord (36) du composant couvercle (22), et la ligne de rupture (26) étant formée par une ou plusieurs découpes, qui traversent complètement le composant support (24) dans la direction de son épaisseur et partiellement le matériau de couverture (28), pour produire une zone d'affaiblissement structural (26') du matériau de couverture (28), dont le contour, au moins dans la zone de la dent ou de l'ondulation, recouvre parfaitement le contour de la ligne de rupture (26) ; la ou les découpes étant configurées de façon à faire un angle α différent de 90° avec la surface du matériau de couverture (28), de telle sorte que la ou les découpes forment une surface de coupe (54), qui avec la face inférieure du composant couvercle (22) fait un angle aigu ; et le matériau de couverture (28) comprenant une couche de mousse (30) et une couche décorative extensible (32) ; et la ou les découpes traversant la couche de mousse (30) complètement, ainsi que la couche décorative dans la direction de son épaisseur sur environ 85 à 98 % de l'épaisseur de la couche décorative (32).

12. Recouvrement pour airbag selon la revendication 11, dans lequel la ligne de rupture (26) entre le composant support (24) et le composant couvercle (22) et la zone d'affaiblissement structural (26') du matériau de couverture (28) sont fabriqués par découpe laser ou découpe au jet d'eau en une passe homogène.
